# EUROPEAN PATENT SPECIFICATION

(11) **EP 2 360 086 B1**
(45) Date of publication and mention of the grant of the patent: **25.09.2024**
(21) Application number: 11155347.5
(22) Date of filing: 22.02.2011
(51) Int. Cl.: B62K 25/28, B62M 7/04, F16H 9/18, F16H 37/02, F16H 7/02

(54) **Two-wheeled motor vehicle**
Zweirädriges Motorfahrzeug
Véhicule à moteur à deux roues

(30) Priority: 24.02.2010 JP 2010038829; 24.12.2010 JP 2010288070
(43) Date of publication of application: 24.08.2011
(73) Proprietor: Yamaha Hatsudoki Kabushiki Kaisha, Shizuoka-ken Shizuoka 438-8501 (JP)
(72) Inventor: Shigetomi, Yuya, Iwata-shi Shizuoka 438-8501 (JP); Hashimoto, Isao, Iwata-shi Shizuoka 438-8501 (JP); Oono, Takashi, Iwata-shi Shizuoka 438-8501 (JP); Mori, Shuichi, Iwata-shi Shizuoka 438-8501 (JP); Uemura, Keisuke, Iwata-shi Shizuoka 438-8501 (JP)
(74) Representative: Grünecker Patent- und Rechtsanwälte PartG mbB

(56) References cited:
- EP-A2- 1 186 526
- US-A- 4 494 622
- US-A1- 2002 104 702
- US-A1- 2007 007 065

## Description

This invention relates to a scooter type two-wheeled motor vehicle having an engine unit and a secondary reduction mechanism for transmitting power from an output shaft of the engine unit to a drive wheel.

Prior art document US 2002/0104702 A1 discloses a motorcycle accommodates an enlarged rear tire by interposing an intermediate shaft between the transmission output gear and the rear wheel drive gear. The intermediate shaft includes a power input gear disposed in the same vertical plane as the transmission output gear, and a first drive belt couples the two together. The intermediate shaft also includes a power output gear disposed in the same vertical plane as the rear wheel drive gear, and a second drive belt couples the two together. The first vertical plane lies closer to the central longitudinal axis of the support frame than does the second vertical plane, allowing the center of mass of the engine and transmission to be maintained substantially along the central longitudinal axis. When incorporated into a soft-tail type motorcycle frame, the intermediate shaft is coincident with the pivot axis of the soft-tail suspension.

Prior art document US 2007/0007065 A1 discloses a scooter type two-wheeled motor vehicle comprising: an engine unit including an engine with a crankshaft, a speed change mechanism for changing speed of rotation outputted from the crankshaft of the engine, and an output shaft for receiving power from the speed change mechanism, wherein the speed change mechanism has a V-belt type continuously variable transmission; a first pulley fixed to the output shaft; a second pulley connected to a drive wheel;a chain extending between and wound around the first pulley and the second pulley for transmitting power from the output shaft to the drive wheel; and a swing arm for supporting the drive wheel to be swingable about the output shaft, wherein the speed change mechanism is the V-belt type continuously variable transmission having a drive shaft, a driven shaft and the V-belt, the speed change mechanism has a gear reduction mechanism for decelerating output from the V-belt type continuously variable transmission and the output from the continuously variable transmission is transmitted to the output shaft through the clutch mechanism and the gear reduction mechanism.

Conventionally, there are two types of device for transmitting power between the engine unit and a rear wheel acting as the drive wheel; one using a chain, and the other using a toothed belt. Either type is provided to extend parallel to a swing arm, and the chain or toothed belt is swingable with swinging of the swing arm. Patent Document 1 describes a two-wheeled motor vehicle which uses a chain for power transmission between the engine unit and drive wheel. Patent Document 2 describes a two-wheeled motor vehicle which uses a toothed belt for power transmission between the engine unit and drive wheel.

### (1) Technique of Patent Document 1

The two-wheeled motor vehicle described in Patent Document 1 (Japanese Unexamined Patent Publication H8-85484) has a secondary reduction mechanism with a chain for transmitting power from the output shaft to the rear wheel. Since the chain can be rusted through exposure to rain water, a chain case is provided for covering substantially the entire chain.

### (2) Technique of Patent Document 2

The two-wheeled motor vehicle described in Patent Document 2 (Japanese Patent No. 4197067) has a secondary reduction mechanism with a toothed belt for transmitting power from the output shaft to the rear wheel. Compared with the chain, the toothed belt has a possibility of tooth jumping in which the toothed belt separates from a pulley of the output shaft. So, the toothed belt is provided with tooth jump prevention rollers.

The two-wheeled motor vehicle described in Patent Document 1 has a problem that the chain can be rusted not only by rain water but also by moisture in the air. In one method of preventing formation of rust, the chain is enclosed in a chain case, and the chain case is filled with lubricating oil. This can reduce formation of rust and can reduce frequency of maintenance. Sprockets around which the chain is wound are highly rigid, and thus the teeth of the sprockets will not deform easily. Since the chain is also highly rigid, the chain can be kept in high tension and will not loosen easily. With these features, tooth jumping hardly occurs with the chain wound around the two sprockets. However, since the chain case swings up and down with the chain, there is a problem of the swingable members becoming heavy.

The two-wheeled motor vehicle described in Patent Document 2 requires no lubrication and is free from the problem of rust formation since the toothed belt is used for power transmission from the output shaft to the rear wheel. Thus, there is no need to provide a chain case, and the material for the swingable members can be reduced. Further, the toothed belt can reduce frequency of maintenance, as compared with a chain. However, tooth jump prevention rollers must be arranged in order to prevent tooth jumping in which the toothed belt separates from the pulley of the output shaft. Although tooth jumping can be prevented by arranging the rollers to press down the toothed belt, a large space is required around the output shaft for installing the rollers, which enlarges the vehicle size. As another method of preventing tooth jumping, the diameter of the pulley of the output shaft may be increased. However, with an increase in the diameter of the pulley of the output shaft, the rear wheel must have a drive shaft with an increased pulley diameter, which makes it impossible to secure a banking angle.

This invention has been made having regard to the state of the art noted above, and its object is to provide a scooter type two-wheeled motor vehicle which can maintain a vehicle size and a banking angle similar to those in the prior art while reducing the frequency of maintenance and reducing the weight of swingable members.

Inventor herein has attained the findings that, with a pivot shaft provided coaxially with an output shaft, a swing arm and a toothed belt can be swung synchronously, thereby to prevent the toothed belt becoming detached. This measure can maintain a vehicle size and a banking angle similar to those in the prior art while reducing the frequency of maintenance and reducing the weight of swingable members.

According to the present invention said object is solved by a scooter type two-wheeled motor vehicle having the features of independent claim 1. Preferred embodiments are laid down in the dependent claims.

A two-wheeled motor vehicle comprises an engine unit including an engine with a crankshaft, a speed change mechanism for changing speed of rotation outputted from the crankshaft of the engine, and an output shaft for receiving power from the speed change mechanism; a first pulley fixed to the output shaft; a second pulley connected to a drive wheel; a toothed belt extending between and wound around the first pulley and the second pulley for transmitting power from the output shaft to the drive wheel; and a swing arm for supporting the drive wheel to be swingable about the output shaft.

Accordingly, the speed of rotation outputted from the crankshaft of the engine is changed by the speed change mechanism. Further, power is transmitted from the speed change mechanism to the output shaft. The engine unit has these components, i.e. the engine, speed change mechanism and output shaft. The output shaft has the first pulley fixed thereto. The second pulley is connected to the drive wheel. The toothed belt extends between and is wound around the first pulley and second pulley. The toothed belt transmits power from the output shaft to the drive wheel through the first pulley and second pulley. The swing arm supports the drive wheel to be swingable about the output shaft.

By employing the toothed belt for power transmission from the output shaft to the drive wheel, a die-cast case can be omitted to realize weight saving of the construction around the drive wheel. A further weight saving is achieved by omitting the oil stored in the case. Further, the swing arm swings about the axis of the output shaft, which synchronizes with swinging of the toothed belt, whereby the toothed belt does not easily come off the first pulley and second pulley. These features realize the two-wheeled motor vehicle which, while reducing the frequency of maintenance, and reducing the weight of the swinging members, can maintain a vehicle size and a banking angle similar to those in the prior art.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is a side view showing an outline construction of a scooter type two-wheeled motor vehicle according to this invention;
Fig. 2 is a side view showing an outline construction in a body cover of the scooter type two-wheeled motor vehicle;
Fig. 3 is a schematic view of a seat and adjacent components seen in a direction of arrow III of Fig. 1;
Fig. 4 is a schematic view of the seat and adjacent components seen in the direction of arrow III of Fig. 1;
Fig. 5 is a developed sectional view taken on line V-V of Fig. 2 and showing an engine unit and a swing arm;
Fig. 6 is an enlarged view of a reduction gear mechanism and adjacent components shown in Fig. 5;
Fig. 7 is a side view of a toothed belt according to this invention; and
Fig. 8 is a side view of the swing arm according to this invention.

### DESCRIPTION OF THE PREFERRED EMBODIMENTS

Embodiment 1 of this invention will be described hereinafter with reference to the drawings.

In the following description, the front, rear, right and left are directions seen from the rider seated on a two-wheeled motor vehicle.

### 1. Outline construction of two-wheeled motor vehicle

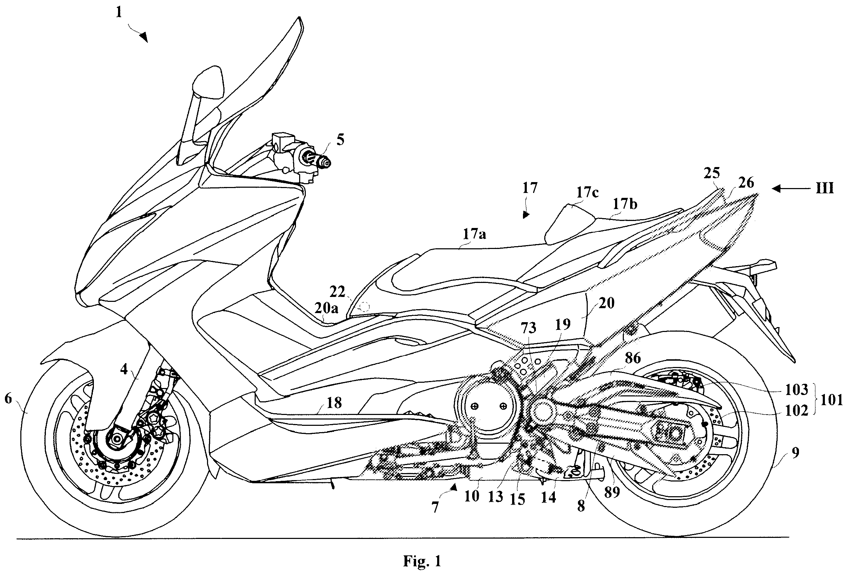

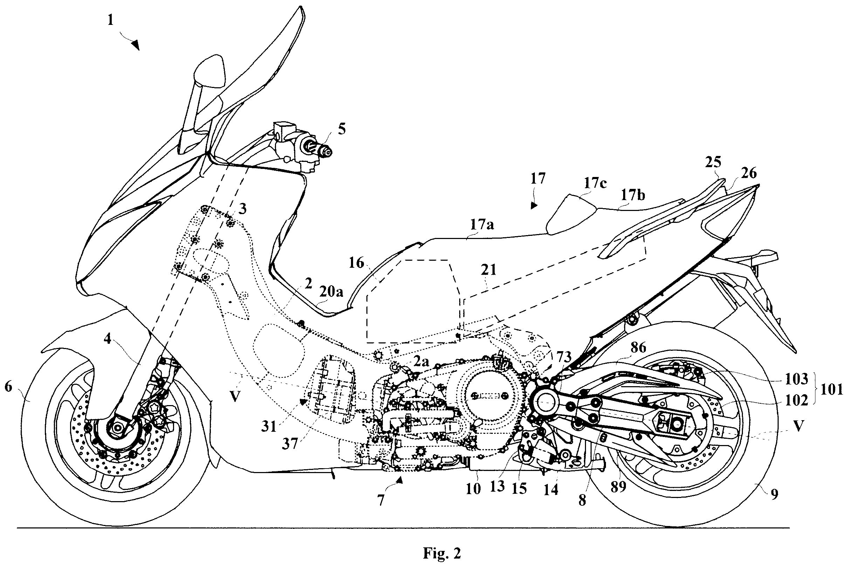

Reference is made to Figs. 1 and 2. Fig. 1 is a side view showing an outline construction of a two-wheeled motor vehicle 1 according to this invention.

Fig. 2 is a side view showing an outline construction in a body cover of the two-wheeled motor vehicle. The two-wheeled motor vehicle 1 is a scooter type vehicle having a diamond frame type body frame 2 with an arcuate shape extending downward from a front end. The body frame 2 is not limited to this type, but may be the underbone type. A head tube 3 is disposed in an upper front portion of the body frame 2. The head tube 3 rotatably supports a front fork 4. A handlebar 5 is connected to an upper end of the front fork 4, and the front fork 4 is rotatable by operation of the handlebar 5. A front wheel 6 is rotatably attached to a lower end of the front fork 4.

An engine unit 7 is attached to the body frame 2 through a bracket 2a. By fixing the engine unit 7 to be body frame 2, the engine unit 7 functions as part of the frame. This realizes a reduction of frame pipes, which allows the vehicle body to be small and lightweight.

A swing arm 8 is connected to the rear of the engine unit 7 to be swingable up and down. A rear wheel 9 is rotatably supported at the rear of the swing arm 8. A rear suspension 10 is disposed between the rear of the body frame 2 and the rear wheel 9 for absorbing swings of the swing arm 8.

A main stand 14 is pivotably connected to a lower portion at the rear of the engine unit 7 through a bracket 13. The main stand 14 is pivotable on a pivot shaft 15 of the bracket 13. The rear wheel 9 contacts a road surface when the main stand 14 does not contact the road surface, i.e. in a contained state. The rear wheel 9 is separated from the road surface when the main stand 14 contacts the road surface, i.e. in a standing state. The main stand 14 in the contained state overlaps the rear wheel 9 in a side view, and a first pulley 73 is disposed at the rear of the engine unit 7 and above the main stand 14.

A fuel tank 16 is disposed above the engine unit 7. A seat 17 for seating the rider is disposed above the fuel tank 16. Between the handlebar 5 and seat 17 are low-floor footrests 18 for receiving the rider's feet. The footrests 18 extend forward from right and left sides of the seat 17. Tandem footrests 19 for receiving a passenger's feet are provided above the first pulley 73 connected to the engine unit 7 and below the seat 17. The body frame 2 is covered with a body cover 20 divided into parts. In particular, a cover 20a projects forward from the seat 17 and upward from between the right and left footrests 18. Below the cover 20a, an engine 31 of the engine unit 7 is disposed, and particularly a cylinder block 37 of the engine 31 is disposed. The cylinder block 37 is located forward of a crankcase 36.

A storage box 21 is disposed rearward of the fuel tank 16. The storage box 21 can store helmets. The seat 17 is disposed above the fuel tank 16 and storage box 21 to be pivotable about a hinge 22 provided at a forward end of the seat 17. The seat 17 includes a main seat 17a for seating the rider, and a tandem seat 17b for seating a passenger rearward of the main seat 17a. A projection 17c is formed between the main seat 17a and tandem seat 17b. A glove bar 25 is disposed around the tandem seat 17b to be held by the passenger. A storage lockbox 26 is attached below the glove bar 25.

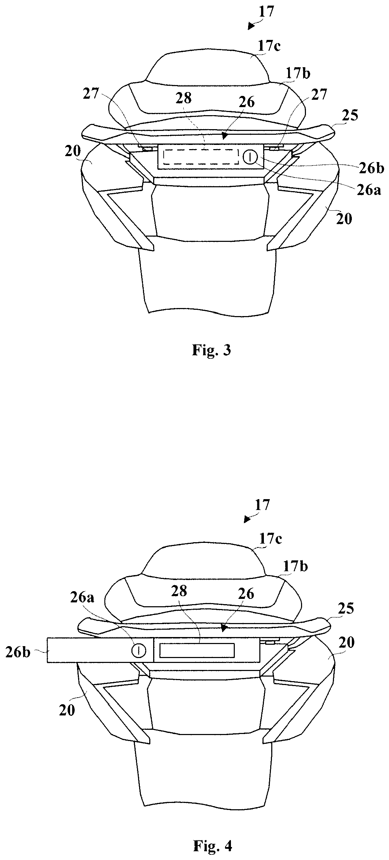

Next, reference is made to Fig. 3. Fig. 3 is a schematic view of the seat and adjacent components seen in a direction of arrow III of Fig. 1. The storage lockbox 26 is fixed to the rear end of the glove bar 25 with bolts 27. The storage lockbox 26 has a key cylinder 26a and a case lid 26b slidable right and left. The case lid 26b is slidable when the key cylinder 26a is in an open state, and is not slidable when the key cylinder 26a is in a closed state.

Next, reference is made to Fig. 4. Fig. 4 is a schematic view of the seat and adjacent components seen in the direction of arrow III of Fig. 1, in which the case lid of the storage lockbox is opened. A communication device 28 is stored inside the storage lockbox 26. Locking the storage lockbox 26 can prevent theft of a communication card of a toll collection system inserted in the communication device 28. An ignition key of the two-wheeled motor vehicle 1 may be used as the key for opening and closing the key cylinder 26a.

### 2. Construction of engine unit

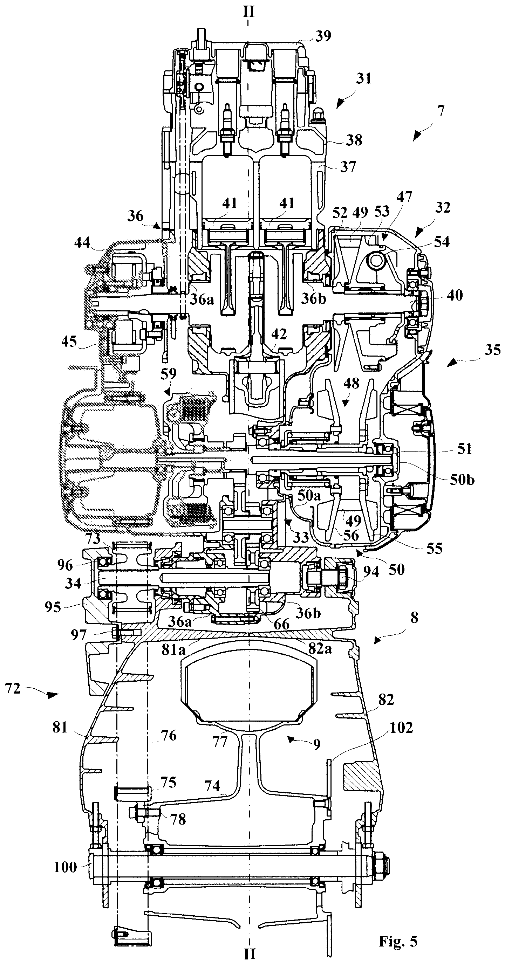

The construction of the engine unit 7 provided for the two-wheeled motor vehicle 1 will be described with reference to Fig. 5. Fig. 5 is a developed sectional view taken on line V-V of Fig. 2 and showing the engine unit and swing arm.

The engine unit 7 includes the engine 31, a V-belt type continuously variable transmission (hereinafter called CVT) 32 disposed rightward and rearward of the engine 31, a clutch mechanism 59 disposed leftward of a rear portion of the CVT 32, a reduction gear mechanism 33 disposed leftward and rearward of the CVT 32, and an output shaft 34 disposed rearward of the reduction gear mechanism 33. The CVT 32 and reduction gear mechanism 33 constitute a speed change mechanism 35 for outputting, in varied speeds, rotation outputted from a crankshaft 40 of the engine 31 to the output shaft 34.

The engine 31 is a 4-cycle parallel 2-cylinder engine. The engine 31 is disposed in a position inclined a large degree forward to a near horizontal state, with the cylinder block 37, cylinder head 38 and cylinder head cover 39 connected to the front of the crankcase 36. The crankcase 36 is split transversely into a left crankcase 36a and a right crankcase 36b. The crankcase 36 houses a middle portion of the crankshaft 40 and the reduction gear mechanism 33. Pistons 41 are connected to the crankshaft 40 such that reciprocating movement of the pistons 41 produces rotation of the crankshaft 40. A balancer 42 is provided between the two pistons 41.

A left portion of the crankshaft 40 is connected to an alternator 44. With rotation of the crankshaft 40, the alternator 44 generates AC power. The alternator 44 is housed in a dynamo cover 45 connected to the left crankcase 36a.

A right portion of the crankshaft 40 is connected to the CVT 32. The CVT 32 includes a CVT first pulley 47, a CVT second pulley 48, and a V-belt 49 wound around the CVT first pulley 47 and CVT second pulley 48. The CVT 32 is housed in a speed changer case 50. The speed changer case 50 is split transversely into a left speed changer case 50a and a right speed changer case 50b. The speed changer case 50 is disposed on the right side of the crankcase 36, with the left speed changer case 50a fixed to the right side of the right crankcase 36b.

The CVT first pulley 47 is rotatable with the crankshaft 40. The crankshaft 40 acts also as drive shaft of the CVT first pulley 47. Rearward of the CVT first pulley 47 is the CVT second pulley 48 supported by a driven shaft 51. The driven shaft 51 is disposed parallel to the crankshaft 40. Rotation of the crankshaft 40 is transmitted to the driven shaft 51 through the CVT first pulley 47, V-belt 49 and CVT second pulley 48.

The CVT first pulley 47 includes a fixed pulley body 52 located leftward transversely of the vehicle body, i.e. inward in the direction of width of the vehicle with respect to a center line II of the main frame 2, and a movable pulley body 53 located rightward transversely of the vehicle body, i.e. outward in the direction of width of the vehicle, and opposed to the fixed pulley body 52. The fixed pulley body 52 is fixed to the crankshaft 40 to be rotatable with the crankshaft 40. The movable pulley body 53 is disposed rightward of the fixed pulley body 52, and is mounted to be slidable along the crankshaft 40. Roller weights 54 are arranged on a right portion of the movable pulley body 53. With this construction, the movable pulley body 53, while rotating with the crankshaft 40, is slidable axially of the crankshaft 40 by rotation of the latter.

The CVT second pulley 48 includes a fixed pulley body 55 located rightward transversely of the vehicle body, and a movable pulley body 56 located leftward transversely of the vehicle body and opposed to the fixed pulley body 55. The movable pulley body 56 is slidable axially of the driven shaft 51 while rotating with the driven shaft 51.

The CVT 32 transmits power of the crankshaft 40 to the driven shaft 51 through the V-belt 49. An increase in the rotating speed of the crankshaft 40 causes centrifugal movement of the roller weights 54, whereby the movable pulley body 53 of CVT first pulley 47 approaches the fixed pulley body 52. This increases the winding diameter of the V-belt 49 fitted between the fixed pulley body 52 and movable pulley body 53. Conversely, the winding diameter of the V-belt 49 fitted between the fixed pulley body 55 and movable pulley body 56 of the CVT second pulley 48 becomes smaller, thereby automatically providing varied speeds.

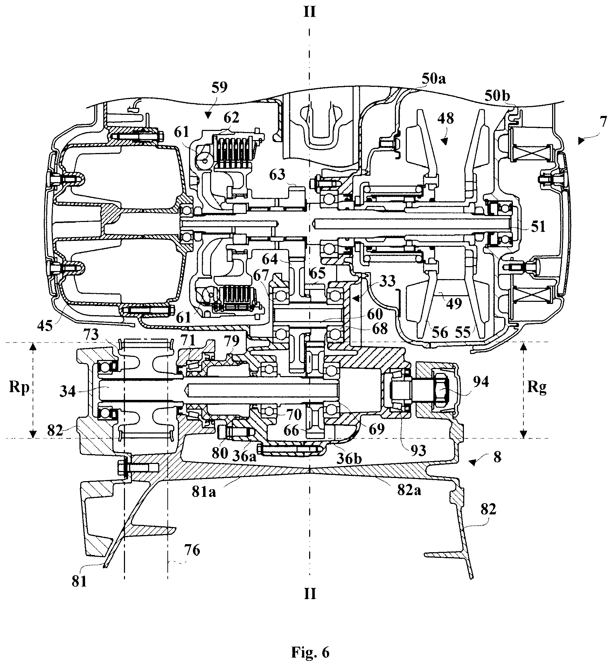

Next, reference is made to Fig. 6. Fig. 6 is an enlarged view of the reduction gear mechanism and adjacent components shown in Fig. 5. The clutch mechanism 59 is disposed leftward of the driven shaft 51. The clutch mechanism 59 is disposed coaxially with the driven shaft 51. The driven shaft 51 is connected to the reduction gear mechanism 33 between the CVT second pulley 48 and clutch mechanism 59. The reduction gear mechanism 33 includes, arranged between the driven shaft 51 and output shaft 34, an intermediate shaft 60 extending parallel to the driven shaft 51 and output shaft 34, and a group of gears mounted on these shafts. Rotative power of the engine unit 7 is outputted from the output shaft 34.

The clutch mechanism 59 is constructed such that, when the rotating speed of the driven shaft 51 exceeds a predetermined speed, clutch weights 61 in centrifugal movement move toward a pressure plate 62. Consequently, the pressure plate 62 is pushed in the direction of the CVT 32, to engage the clutch. With the engagement of the clutch, a clutch output gear 63 also rotates. The clutch output gear 63 is meshed with an intermediate shaft first gear 64 fixed to the intermediate shaft 60. The clutch output gear 63 has a smaller diameter than the intermediate shaft first gear 64.

An intermediate shaft second gear 65 fixed to the intermediate shaft 60 is meshed with an output shaft gear 66 fixed to the output shaft 34. The intermediate shaft second gear 65 has a smaller diameter than the output shaft gear 66. Thus, the reduction gear mechanism 33 provides deceleration in two steps.

The intermediate shaft 60 has a left end thereof supported by the left crankcase 36a through a bearing 67. The intermediate shaft 60 has a right end thereof supported by the right crankcase 36b through a bearing 68. The output shaft 34 has a right end thereof supported by the right crankcase 36b through a bearing 69. The output shaft 34 is supported adjacent the middle position thereof by the left crankcase 36a through a bearing 70.

### 3. Construction of secondary reduction mechanism

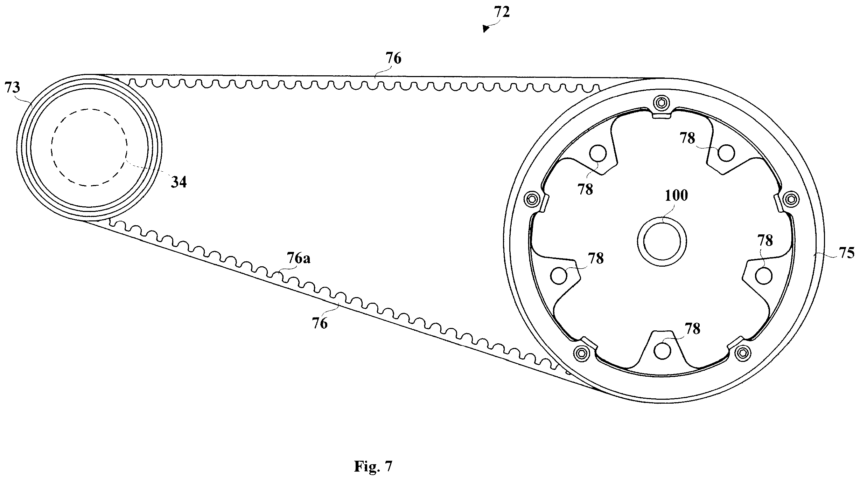

Fig. 7 is a side view of a toothed belt. As shown in Figs. 5 and 7, a secondary reduction mechanism 72 includes a first pulley 73 fixed to a left portion of the output shaft 34, a second pulley 75 fixed to a left portion of a wheel body 74 of the rear wheel 9, and a toothed belt 76 wound around the first pulley 73 and second pulley 75.

The first pulley 73 has a diameter of 90mm, and the second pulley 75 a diameter of 200mm. Thus, the first pulley 73 is smaller in diameter than the second pulley 75. The first pulley 73 is smaller in diameter than pulleys of output shafts of other, sport type and cruiser type two-wheeled motor vehicles. This is because a large space cannot be secured under the seat 17 of the scooter type two-wheeled motor vehicle.

The toothed belt 76 has belt teeth 76a. The first pulley 73 and second pulley 75 also have teeth for meshing with the belt teeth 76a. The toothed belt 76 transmits rotative power of the output shaft 34 to the rear wheel 9.

The rear wheel 9 has a rim portion 77 and the wheel body 74. The second pulley 75 is fastened directly to the wheel body 74 with bolts 78, without using a hub clutch and a hub damper. The wheel body 74 is rotatable with the second pulley 75. The rotation of the wheel body 74 rotates the rear wheel 9 acting as drive wheel. The bolts 78 correspond to the fastening members in this invention, and the rear wheel 9 corresponds to the drive wheel in this invention.

The secondary reduction mechanism 72 is a one-step reduction mechanism. With this, a three-step speed reduction is carried out in the course of power transmission from the CVT 32 to the rear wheel 9. The speed reduction by the CVT 32 has a limited range of reduction ratios compared with a gear transmission mechanism. In this embodiment, the diameter Rg of the output shaft gear 66 and the diameter Rp of the first pulley 73 are equal (see Fig. 6). Consequently, a larger number of meshing teeth can be secured between the first pulley 73 and the belt teeth 76a of the toothed belt 76 than in the case where the diameter of the pulley is made just equal to the diameter of a conventional sprocket. It is also possible to prevent the toothed belt 76 from contacting the engine unit 7. Since the diameter of the second pulley 75 is not excessively large, a sufficient banking angle of the two-wheeled motor vehicle 1 can be secured.

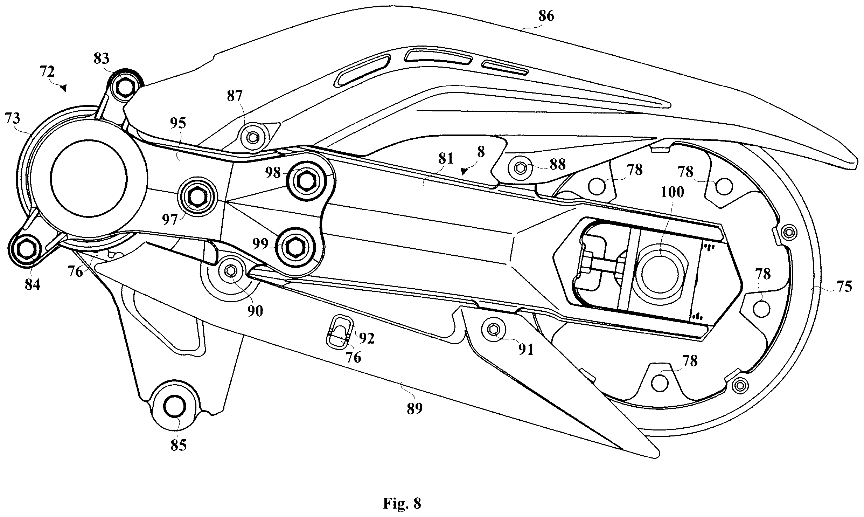

The swing arm 8 is divided into two halves, i.e. a left divided part 81 and a right divided part 82. A mounting boss 81a of the left divided part 81 and a mounting boss 82a of the right divided part 82 are in an end-to-end abutment against each other. Fig. 8 is a side view of the swing arm. As shown in Fig. 8, the left divided part 81 and right divided part 82 are connected by bolts 83 and 84. The swing arm 8 is swingably attached to the rear end of the rear suspension 10 through a shaft 85.

An upper belt cover 86 covering the toothed belt 76 is fixed to an upper portion of the left divided part 81 by bolts 87 and 88. A lower belt cover 89 covering the toothed belt 76 is fixed to a lower portion of the left divided part 81 by bolts 90 and 91. These covers 86 and 89 prevent gravels and the like becoming caught between the first pulley 73 and second pulley 75, and the toothed belt 76. In this way, a large part of the toothed belt 76 extending from the first pulley 73 to the second pulley 75 is covered by the upper belt cover 86 and lower belt cover 89. A forward portion of the toothed belt 76 wound around the first pulley 73 and a rearward portion of the toothed belt 76 wound around the second pulley 75 are exposed. A window 92 is formed in a middle position of the lower belt cover 89, and the toothed belt 76 is exposed through the window 92.

As shown in Fig. 6, the right divided part 82 has a forward end thereof connected to the rear of the right crankcase 36b by a bolt 94 to be swingable up and down. A left end of the bolt 94 is rotatably supported by the right crankcase 36b through a bearing 93. The bolt 94 is the pivot shaft in this invention.

The left divided part 81 has a forward end thereof connected to the rear of the left crankcase 36a through a holder 79 to be swingable up and down. The holder 79 is open at both right and left sides, and the output shaft 34 extends through the centers of the openings. The holder 79 is fixed to the left crankcase 36a by bolts 80. The left divided part 81 is swingably supported by the holder 79 through a bearing 71. Thus, the left divided part 81 is connected to the left crankcase 36a by the holder 79 to be swingable about the output shaft 34 acting as central axis. Shocks due to swinging of the left divided part 81 are transmitted to the left crankcase 36a through the holder 79, whereby the shocks are mitigated for the output shaft 34. In this construction, since the bolt 94 and output shaft 34 are arranged coaxially, the output shaft 34, although performing the function as the central axis of swinging of the left divided part 81, hardly undergoes the shocks of swinging of the left divided part 81.

Since the bolt 94 and output shaft 34 are arranged coaxially, up-and-down swinging of the toothed belt 76 synchronizes with up-and-down swinging of the swing arm 8. This reduces the influence of the swinging of the swing arm 8 on the tension applied to the toothed belt 76. The bolt 94 and output shaft 34 act as pivot shaft of the swing arm 8.

The swing arm 8 is connected to the engine unit 7, but not to the body frame 2. That is, the swing arm 8 is connected to the body frame 2 through the engine unit 7. Consequently, vibration of the swing arm 8 is absorbed not only by the rear suspension 10 but also by the V-belt 49, thereby preventing the vibration of the swing arm 8 from being transmitted directly to the body frame 2. This can also reduce the vibration transmitted to the rider on the seat 17 through the body frame 2.

Referring to Fig. 5, the first pulley 73 is fixed to the output shaft 34 in a position outward of the left divided part 81 transversely of the vehicle body. To the left of the first pulley 73, an output shaft cover 95 supports the left end of the output shaft 34 through a bearing 96. The output shaft cover 95 is fixed to the left divided part 81 by bolts 97, 98 and 99. The second pulley 75 is fixed to the wheel body 74 in a position inward of the left divided part 81 transversely of the vehicle body. Consequently, the second pulley 75 is protected by the left divided part 81 also when the two-wheeled motor vehicle 1 makes turns.

The left divided part 81 which is a half body of the swing arm 8 extends through a space between upper and lower portions of the toothed belt 76 rotating between the first pulley 73 and second pulley 75. Thus, the left divided part 81 and left crankcase 36a can be pivotably connected through the holder 79 in a position inward of the first pulley 73 transversely of the vehicle body. This reduces the influence of swinging of the left divided part 81 on the output shaft 34. A rear wheel axle 100 is fixed to rear ends of the left divided part 81 and right divided part 82. The rear wheel axle 100 supports the rear wheel 9.

A brake mechanism 101 is disposed on the right side of the rear wheel 9. The brake mechanism 101 has a brake disc 102 and a caliper 103. The brake disc 102 is fixed to the right side of the wheel body 74. The caliper 103 of the brake disc 102 is disposed on the right divided part 82. The caliper 103 has a pad for pressing on the brake disc 102 to apply a braking force thereto (see Fig. 1). The brake disc 102 and caliper 103 are arranged opposite the secondary reduction mechanism 72 across the rear wheel 9, which arrangement can keep an excellent right and left weight balance of the rear wheel 9.

According to the embodiment, since the bolt 94, which is the pivot shaft of the swing arm 8, and the output shaft 34 are arranged coaxially, the swinging of the swing arm 8 synchronizes with that of the toothed belt 76, thereby to prevent the toothed belt 76 from coming off the first pulley 73 and second pulley 75. Since the output shaft 34 and the bolt 94 acting as the pivot shaft are coaxial, even when the swing arm 8 swings up and down, the tension of the toothed belt 76 can be maintained unchanged without being influenced by different strokes of the rear suspension 10. Since the tension of the toothed belt 76 is not influenced by swinging of the swing arm 8, the toothed belt 76 is prevented from coming off the first pulley 73 and second pulley 75 due to conditions of a road surface on which the two-wheeled motor vehicle 1 is running. The first pulley 73 is made small in diameter, compared with other, cruiser type and sport type two-wheeled motor vehicles. Although this renders the toothed belt 76 easily detachable from the pulley, it is possible to prevent detachment of the toothed belt 76 and chipping of the belt teeth 76a. Preventing chipping of the belt teeth 76a can prevent lowering of the transmission efficiency of the secondary reduction mechanism 72. Further, lowering of the durability of the toothed belt 76 can be prevented.

The swing arm 8 swings about the axis of the output shaft 34, which synchronizes with swinging of the toothed belt 76, whereby the toothed belt 76 does not easily come off the first pulley 73 and second pulley 75. Thus, there is no need to provide rollers to prevent tooth jumping of the toothed belt 76, or to provide a large space around the output shaft 34. This can maintain a vehicle size similar to that in the prior art. The pulley diameter of the output shaft 34 is not made excessively large in order to prevent tooth jumping. This can prevent enlargement of the pulley diameter of the rear wheel axle 100 which is the drive shaft of the rear wheel 9, thereby to maintain a banking angle similar to that in the prior art.

By employing the toothed belt 76 for power transmission from the output shaft 34 to the rear wheel 9, a conventional die-cast case can be omitted to realize weight saving of the construction around the rear wheel 9. A further weight saving is achieved by omitting the oil conventionally stored in the die-cast case. This can reduce the frequency of maintenance, and the weight of the swinging members. Further, the weight saving of the construction around the rear wheel 9 results in a uniformed weight distribution longitudinally of the two-wheeled motor vehicle 1. The rear wheel 9 has an improved road following capability, and the rider can enjoy improved comfort. The weight saving of the construction around the rear wheel 9 provides weight saving also of the two-wheeled motor vehicle 1, which can reduce manufacturing cost, and improve fuel consumption.

Since vibration of the rear wheel 9 is absorbed by the toothed belt 76, the transmission of vibration from the rear wheel 9 to the engine unit 7 is reduced, and the second pulley 75 and rear wheel 9 can be directly fastened to each other with the bolts 78. By fastening the second pulley 75 and rear wheel 9 directly, a clutch damper and a hub clutch conventionally attached to the rear wheel 9 can be omitted, to achieve a further weight saving of the construction around the rear wheel 9.

The engine unit 7 is disposed below the fuel tank 16 below the seat 17, with the engine 31 laid in a horizontal position. Consequently, the space between the engine unit 7 and rear wheel 9 is smaller than that of a cruiser type two-wheeled motor vehicle or sport type two-wheeled motor vehicle. The first pulley 73 has a size to fit in a position rearward of the engine unit 7 disposed below the fuel tank 16 and above the main stand 14. Thus, although the two-wheeled motor vehicle 1 is the scooter type, the toothed belt 76 can be employed conveniently as the secondary reduction mechanism.

Since the CVT 32 with the V-belt 49 acts as the speed change mechanism for changing speed of the rotation output of the engine 31, the vibration produced by the engine 31 can be reduced. The V-belt 49 and toothed belt 76 are arranged at opposite sides of the center line II-II transversely of the two-wheeled motor vehicle 1. Vibration of each of the right and left sides of the two-wheeled motor vehicle 1 is absorbed by each belt, thereby to reduce the vibration transmitted to the rider. That the V-belt 49 and toothed belt 76 are belts provides an improved right and left weight balance of the two-wheeled motor vehicle 1.

The V-belt 49 is disposed forward of the output shaft 34, while the toothed belt 76 is disposed rearward of the output shaft 34. Thus, each belt absorbs vibration transmitted from the forward portion or rearward portion of the two-wheeled motor vehicle 1. This can reduce vibration due to irregularity of a road surface before transmission to the rider. The V-belt 49 can reduce vibration transmitted from the front wheel 6 to the engine unit 7 through the front fork 4 and body frame 2. The toothed belt 76 can reduce vibration transmitted from the rear wheel 9 to the engine unit 7. Thus, the vibrations transmitted to the seat 17 are reduced by the two belts arranged below and forward and backward of the seat 17.

Conventionally, a two-wheeled motor vehicle with a belt type continuously variable transmission has a limited reduction ratio by the CVT. In order to secure a sufficient reduction ratio, a sprocket of a secondary reduction mechanism has a smaller diameter than a gear fixed to the output shaft. In the above embodiment, the toothed belt 76 is prevented from coming off the first pulley 73 by arranging that the first pulley 73 is equal in diameter to the output shaft gear 66. Further, a space can be provided between the first pulley 73 and the dynamo cover 45 disposed forward of the first pulley 73 to prevent contact between the toothed belt 76 and dynamo cover 45.

In this invention, it is preferred that the swing arm is supported by the engine unit to be rotatable about the output shaft between the first pulley and the engine unit. This construction can reduce transmission to the output shaft of shocks produced by swinging of the swing arm.

In this invention, it is preferred that the swing arm is formed of two halves, which are a first half located at one side of the drive wheel and a second half located at the other side of the drive wheel; the first half being disposed between the first pulley and the engine unit, and supported by the engine unit to be rotatable about the output shaft; and the second half having a support shaft disposed in the engine unit to be coaxial with the output shaft, the second half being disposed at the other side of the engine unit, and rotatably supported by the support shaft. This construction can reduce transmission to the output shaft of shocks produced by swinging of the swing arm.

In this invention, it is preferred that the vehicle further comprises fastening members for directly fastening the second pulley and the drive wheel together. Since vibration of the rear wheel is absorbed by the toothed belt, the transmission of vibration from the rear wheel to the engine unit is reduced, and the second pulley and rear wheel can be directly fastened to each other with the fastening members. By fastening the second pulley and rear wheel directly, this construction can omit a clutch damper and a hub clutch attached to the rear wheel. This achieves a further weight saving of the construction around the rear wheel.

In this invention, it is preferred that the fastening members are bolts. Since the fastening members are bolts according to this construction, the swing arm and drive wheel can be fastened together effectively.

In this invention, it is preferred that the vehicle further comprises a braking mechanism for braking rotation of the drive wheel, wherein the second pulley is disposed at one side of the drive wheel, and the braking mechanism is disposed at the other side of the drive wheel. With the brake mechanism and second pulley arranged at opposite sides of the drive wheel, the second pulley is not disposed outward of the vehicle body, thereby to secure a banking angle. Further, the first pulley also is disposed inward of the vehicle body, thereby to inhibit enlargement of the vehicle body.

In this invention, it is preferred that the vehicle further comprises a seat for seating a rider; a fuel tank disposed below the seat and above the engine unit; and a main stand connected to a lower position of the engine unit for lowering the drive wheel to a road surface, and raising the drive wheel from the road surface; wherein, when the main stand is in a contained state, the main stand and the rear wheel overlap in a side view; and the first pulley is disposed rearward of the engine unit and above the main stand.

According to the above construction, since the engine unit is disposed below the fuel tank below the seat, the engine unit cannot be placed to have the cylinder block located above the crankcase. So the engine unit is placed to have the cylinder block located forward of the crankcase. Consequently, the space between the engine unit and rear wheel is smaller than that of a cruiser type two-wheeled motor vehicle. The first pulley has a size to fit in a position rearward of the engine unit disposed below the fuel tank and above the main stand. Thus, although this is a two-wheeled motor vehicle, the belt can be employed conveniently as the secondary reduction mechanism.

In this invention, it is preferred that the speed change mechanism has a V-belt type continuously variable transmission. An engine with stepped change speed requires a gear change and clutch engagement and disengagement for each shifting operation. Engine speed and transmission torque also change discontinuously for each shifting operation. On the other hand, the V-belt type continuously variable transmission changes speed continuously, and the V- belt itself absorbs vibration. Since the speed change mechanism has the continuously variable transmission with the V-belt, vibration produced by the engine can be reduced as compared with the engine with stepped change speed.

In this invention, it is preferred that the V-belt and the toothed belt are opposed to each other across a center line of the two-wheeled motor vehicle transversely of a vehicle body. According to this construction, the V-belt and toothed belt are arranged at opposite sides of the center line transversely of the two-wheeled motor vehicle. Vibration of each of the right and left sides is absorbed by each belt, thereby to reduce the vibration transmitted to the rider. Since both the V-belt and toothed belt are belts, the right and left weight balance is improved.

In this invention, it is preferred that the V-belt is disposed forward of the output shaft, and the toothed belt is disposed rearward of the output shaft. According to this construction, each belt absorbs vibration transmitted from the forward portion or rearward portion. This can reduce vibration due to irregularity of a road surface before transmission to the rider. The V-belt can reduce vibration transmitted from the front wheel to the engine unit through the frame. The toothed belt can reduce vibration transmitted from the rear wheel to the engine unit. Thus, the vibrations transmitted to the seat are reduced by the two belts arranged below the seat.

In this invention, it is preferred that the speed change mechanism has a gear reduction mechanism for decelerating output from the V-belt type continuously variable transmission, wherein the first pulley is equal in diameter to a gear of the reduction mechanism fixed to the output shaft. According to this construction, output from the V-belt type continuously variable transmission is decelerated by the gear reduction mechanism to be transmitted to the output shaft. Consequently, a reduction mechanism for providing a plurality of speeds is disposed from the V-belt type continuously variable transmission to the drive wheel. The gear of the reduction mechanism fixed to the output shaft is equal in diameter to the first pulley. This secures a sufficient number of meshing teeth of the first pulley and toothed belt to prevent the toothed belt from coming off the first pulley.

In this invention, it is preferred that the speed change mechanism is a V-belt type continuously variable transmission having a drive shaft, a driven shaft and the V-belt; the engine unit has a clutch mechanism disposed coaxially with the driven shaft, and the gear reduction mechanism disposed between the continuously variable transmission and the clutch mechanism; and output from the continuously variable transmission is transmitted to the output shaft through the clutch mechanism and the gear reduction mechanism. According to this construction, the first pulley is located on the output shaft which is a different shaft to the driven shaft of the speed change mechanism, and the gear reduction mechanism for transmitting power to the output shaft is disposed between the continuously variable transmission and the clutch mechanism. This can inhibit the first pulley from being located remote from the center of the engine unit, thereby to inhibit enlargement of the vehicle.

In this invention, it is preferred that the speed change mechanism is a V-belt type continuously variable transmission having a drive shaft, a driven shaft and the V-belt; the engine unit has the gear reduction mechanism for transmitting power between the driven shaft of the continuously variable transmission and the output shaft; and the first pulley is disposed between right and left ends of the engine unit transversely of the vehicle body. According to this construction, the first pulley is disposed within the engine unit transversely of the vehicle body, which can inhibit enlargement of the vehicle.

In this invention, it is preferred that the vehicle further comprises a seat for seating a rider; right and left footrests extending forward from sides of the seat; and a cover member located between the right and left footrests and forward of the seat, and projecting upward from the footrests; wherein the engine unit includes an engine disposed forward of a front end of the seat and below the cover member, and an output shaft disposed rearward of the front end of the seat and rearward of the footrests. According to this construction, the two-wheeled motor vehicle has the engine unit and drive wheel arranged close to each other, with the engine unit extending long rearward from a position forward of the front end of the seat. This invention is particularly effective for the two-wheeled motor vehicle having such configuration since the engine unit is not enlarged.

This invention is not limited to the foregoing embodiment, but may be modified as follows:
(1) In the foregoing embodiment, the CVT 32 is disposed on the right side of the engine unit 7, and the secondary reduction mechanism 72 on the left side of the rear wheel 9. Instead, the CVT 32 may be disposed on the left side of the engine unit 7, and the secondary reduction mechanism 72 on the right side of the rear wheel 9.
(2) In the foregoing embodiment, the two-wheeled motor vehicle 1 is a scooter type two-wheeled motor vehicle.
(3) In the foregoing embodiment, the drive shaft of the CVT first pulley 47 is coaxial with the crankshaft 40. Instead, these shafts may have separate axes.
(4) In the foregoing embodiment, the reduction gear mechanism 33 provides two reduced speeds, but this is not limitative. For example, one reduced speed or three reduced speeds may be provided.
(5) In the foregoing embodiment, the first pulley 73 is fixed to the left portion of the output shaft 34. Instead, the first pulley 73 may be fixed to the right portion of the output shaft 34. The first pulley 73 and CVT 32 may be arranged on the same side.

## Claims

1. A scooter type two-wheeled motor vehicle (1) comprising:
an engine unit (7) including an engine (31) with a crankshaft (40), a speed change mechanism (35) for changing speed of rotation outputted from the crankshaft (40) of the engine (31), and an output shaft (34) for receiving power from the speed change mechanism (35), wherein the speed change mechanism (35) has a V-belt type continuously variable transmission (32);
a first pulley (73) fixed to the output shaft (34);
a second pulley (75) connected to a drive wheel (9);
a toothed belt (76) extending between and wound around the first pulley (73) and the second pulley (75) for transmitting power from the output shaft (34) to the drive wheel (9); and
a swing arm (8) for supporting the drive wheel (9) to be swingable about the output shaft (34), wherein the speed change mechanism (35) is the V-belt type continuously variable transmission (32) having a drive shaft (40), a driven shaft (51) and the V-belt (49), the speed change mechanism (35) has a gear reduction mechanism (33) for decelerating output from the V-belt type continuously variable transmission (32), the first pulley (73) is equal in diameter to a gear (66) of the reduction mechanism (33) fixed to the output shaft (34);
the engine unit (7) has a clutch mechanism (59) disposed coaxially with the driven shaft (51), and the gear reduction mechanism (33) disposed between the continuously variable transmission (32) and the clutch mechanism (59); and
output from the continuously variable transmission (32) is transmitted to the output shaft (34) through the clutch mechanism (59) and the gear reduction mechanism (33).

2. The scooter type two-wheeled motor vehicle (1) according to claim 1, wherein the swing arm (8) is supported by the engine unit (7) to be rotatable about the output shaft (34) between the first pulley (73) and the engine unit (7).

3. The scooter type two-wheeled motor vehicle (1) according to claim 1 or 2, wherein the swing arm (8) is formed of two halves, which are a first half (81) located at one side of the drive wheel (9) and a second half (82) located at the other side of the drive wheel (9);
the first half (81) being disposed between the first pulley (73) and the engine unit (7), and supported by the engine unit (7) to be rotatable about the output shaft (34); and the second half (82) having a support shaft (94) disposed in the engine unit (7) to be coaxial with the output shaft (34), the second half (82) being disposed at the other side of the engine unit (7), and rotatably supported by the support shaft (94).

4. The scooter type two-wheeled motor vehicle (1) according to claim 3, wherein the first half is a left divided part (81) and the second half is a right divided part (82).

5. The scooter type two-wheeled motor vehicle (1) according to claim 4, wherein a mounting boss (81a) of the left divided part (81) and a mounting boss (82a) of the right divided part (82) are in an end-to-end abutment against each other.

6. The scooter type two-wheeled motor vehicle (1) according to any one of claims 1 to 5, further comprising fastening members (78) for directly fastening the second pulley (75) and the drive wheel (9) together.

7. The scooter type two-wheeled motor vehicle (1) according to claim 6, wherein the fastening members (78) are bolts (78).

8. The scooter type two-wheeled motor vehicle (1) according to any one of claims 1 to 7, further comprising a braking mechanism (101) for braking rotation of the drive wheel (9), wherein the second pulley (75) is disposed at one side of the drive wheel (9), and the braking mechanism (101) is disposed at the other side of the drive wheel (9).

9. The scooter type two-wheeled motor vehicle (1) according to any one of claims 1 to 8, further comprising:
a seat (17) for seating a rider;
a fuel tank (16) disposed below the seat (17) and above the engine unit (7); and
a main stand (14) connected to a lower position of the engine unit (7) for lowering the drive wheel (9) to a road surface, and raising the drive wheel (9) from the road surface;
wherein, when the main stand (14)is in a contained state, the main stand (14) and the rear wheel (9) overlap in a side view; and
the first pulley (73) is disposed rearward of the engine unit (7) and above the main stand (14).

10. The scooter type two-wheeled motor vehicle (1) according to any one of claims 1 to 9, wherein the V-belt (49) and the toothed belt (76) are opposed to each other across a center line of the two-wheeled motor vehicle (1) transversely of a vehicle body.

11. The scooter type two-wheeled motor vehicle (1) according to any one of claims 1 to 10, wherein the V-belt (49) is disposed forward of the output shaft (34), and the toothed belt (76) is disposed rearward of the output shaft (34).

12. The scooter type two-wheeled motor vehicle (1) according to any one of claims 1 to 11, wherein the gear (66) of the reduction mechanism (33) is disposed on a center line (II-II) transversely of the scooter type two-wheeled vehicle in a plan view.

13. The scooter type two-wheeled motor vehicle (1) according to any one of claims 1 to 12, wherein:
the first pulley (73) is disposed between right and left ends of the engine unit (7) transversely of the vehicle body.

14. The scooter type two-wheeled motor vehicle (1) according to any one of claims 1 to 13, further comprising:
a respectively the seat (17) for seating a rider;
right and left footrests (18) extending forward from sides of the seat (17); and
a cover member (20) located between the right and left footrests (18) and forward of the seat (17), and projecting upward from the footrests (18);
wherein the engine unit (7) includes an engine (31) disposed forward of a front end of the seat (17) and below the cover member (20), and an output shaft (34) disposed rearward of the front end of the seat (17) and rearward of the footrests (18).

## Patentansprüche

1. Ein Roller-Typ-Zweirad-Kraftfahrzeug (1), das umfasst:
eine Motoreinheit (7), die einen Motor (31) mit einer Kurbelwelle (40), einen Drehzahländerungsmechanismus (35) zum Ändern der Drehzahl, die von der Kurbelwelle (40) des Motors (31) abgegeben wird, und eine Ausgangswelle (34) zum Aufnehmen von Leistung von dem Drehzahländerungsmechanismus (35), enthält, wobei der Drehzahländerungsmechanismus (35) ein V-Riemen-Typ-Stufenlos-Getriebe (32) hat;
eine erste Riemenscheibe (73), die an der Ausgangswelle (34) befestigt ist;
eine zweite Riemenscheibe (75), die mit einem Antriebsrad (9) verbunden ist;
einen Zahnriemen (76), der sich zwischen der ersten Riemenscheibe (73) und der zweiten Riemenscheibe (75) erstreckt und um diese gewickelt ist, um die Leistung von der Ausgangswelle (34) auf das Antriebsrad (9) zu übertragen; und
einen Schwingarm (8) zum Lagern des Antriebsrads (9), um um die Ausgangswelle (34) schwenkbar zu sein, wobei der Drehzahländerungsmechanismus (35) das V-Riemen-Typ-Stufenlos-Getriebe (32) mit einer Antriebswelle (40), einer Abtriebswelle (51) und dem Keilriemen (49) ist, der Drehzahländerungsmechanismus (35) einen Untersetzungsmechanismus (33) zum Verlangsamen des Ausgangs des V-Riemen-Typ-Stufenlos-Getriebes (32) hat, die erste Riemenscheibe (73) im Durchmesser gleich einem Zahnrad (66) des Untersetzungsmechanismus (33) ist, das an der Ausgangswelle (34) befestigt ist;
die Motoreinheit (7) einen Kupplungsmechanismus (59) hat, der koaxial mit der Abtriebswelle (51) angeordnet ist, und der Untersetzungsmechanismus (33) zwischen dem V-Riemen-Typ-Stufenlos-Getriebe (32) und dem Kupplungsmechanismus (59) angeordnet ist; und
der Ausgang des V-Riemen-Typ-Stufenlos-Getriebes (32) über den Kupplungsmechanismus (59) und den Untersetzungsmechanismus (33) auf die Ausgangswelle (34) übertragen wird.

2. Das Roller-Typ-Zweirad-Kraftfahrzeug (1) gemäß Anspruch 1, wobei der Schwingarm (8) von der Motoreinheit (7) um die Ausgangswelle (34) zwischen der ersten Riemenscheibe (73) und der Motoreinheit (7) drehbar gelagert ist.

3. Das Roller-Typ-Zweirad-Kraftfahrzeug (1) gemäß Anspruch 1 oder 2, wobei der Schwingarm (8) aus zwei Hälften gebildet ist, die eine erste Hälfte (81), die auf einer Seite des Antriebsrads (9) angeordnet ist, und eine zweite Hälfte (82), die auf der anderen Seite des Antriebsrads (9) angeordnet ist, sind;
die erste Hälfte (81) zwischen der ersten Riemenscheibe (73) und der Motoreinheit (7) angeordnet ist und von der Motoreinheit (7) um die Ausgangswelle (34) drehbar gehalten wird; und
die zweite Hälfte (82) eine Lagerwelle (94) hat, die in der Motoreinheit (7) angeordnet ist, um koaxial mit der Ausgangswelle (34) zu sein, wobei die zweite Hälfte (82) an der anderen Seite der Motoreinheit (7) angeordnet ist und drehbar von der Lagerwelle (94) gelagert wird.

4. Das Roller-Typ-Zweirad-Kraftfahrzeug (1) gemäß Anspruch 3, wobei die erste Hälfte ein linkes geteiltes Teil (81) und die zweite Hälfte ein rechtes geteiltes Teil (82) ist.

5. Das Roller-Typ-Zweirad-Kraftfahrzeug (1) gemäß Anspruch 4, wobei ein Befestigungsvorsprung (81a) des linken geteilten Teils (81) und ein Befestigungsvorsprung (82a) des rechten geteilten Teils (82) in einer End-zu-End-Anlage gegeneinander sind.

6. Das Roller-Typ-Zweirad-Kraftfahrzeug (1) gemäß irgendeinem der Ansprüche 1 bis 5, das weiterhin Befestigungselemente (78) zur direkten Befestigung der zweiten Riemenscheibe (75) und des Antriebsrads (9) aneinander umfasst.

7. Das Roller-Typ-Zweirad-Kraftfahrzeug (1) gemäß Anspruch 6, wobei die Befestigungselemente (78) Bolzen (78) sind.

8. Das Roller-Typ-Zweirad-Kraftfahrzeug (1) gemäß irgendeinem der Ansprüche 1 bis 7, das weiterhin einen Bremsmechanismus (101) zum Bremsen der Drehung des Antriebsrads (9) umfasst, wobei die zweite Riemenscheibe (75) an einer Seite des Antriebsrads (9) angeordnet ist und der Bremsmechanismus (101) an der anderen Seite des Antriebsrads (9) angeordnet ist.

9. Das Roller-Typ-Zweirad-Kraftfahrzeug (1) gemäß irgendeinem der Ansprüche 1 bis 8, das weiterhin umfasst:
einen Sitz (17) zum Sitzen eines Fahrers;
einem Kraftstofftank (16), der unterhalb des Sitzes (17) und oberhalb der Motoreinheit (7) angeordnet ist; und
einen Hauptständer (14), der mit einer unteren Position der Motoreinheit (7) verbunden ist, um das Antriebsrad (9) auf eine Straßenoberfläche abzusenken und das Antriebsrad (9) von der Straßenoberfläche anzuheben;
wobei, wenn der Hauptständer (14) in einem gezogenen Zustand ist, der Hauptständer (14) und das Hinterrad (9) in einer Seitenansicht überlappen; und
die erste Riemenscheibe (73) hinter der Motoreinheit (7) und oberhalb des Hauptständers (14) angeordnet ist.

10. Das Roller-Typ-Zweirad-Kraftfahrzeug (1) gemäß irgendeinem der Ansprüche 1 bis 9, wobei der Keilriemen (49) und der Zahnriemen (76) einander quer zu einer Mittellinie des zweirädrigen Kraftfahrzeugs (1) und quer zu einem Fahrzeugkörper gegenüberliegen.

11. Das Roller-Typ-Zweirad-Kraftfahrzeug (1) gemäß irgendeinem der Ansprüche 1 bis 10, wobei der Keilriemen (49) vor der Ausgangswelle (34) angeordnet ist, und der Zahnriemen (76) hinter der Ausgangswelle (34) angeordnet ist.

12. Das Roller-Typ-Zweirad-Kraftfahrzeug (1) gemäß irgendeinem der Ansprüche 1 bis 11, wobei das Zahnrad (66) des Untersetzungsmechanismus (33) auf einer Mittellinie (II-II) quer zum Roller-Typ-Zweirad-Kraftfahrzeug in Draufsicht angeordnet ist.

13. Das Roller-Typ-Zweirad-Kraftfahrzeug (1) gemäß irgendeinem der Ansprüche 1 bis 12, wobei:
die erste Riemenscheibe (73) zwischen dem rechten und dem linken Ende der Motoreinheit (7) quer zum Fahrzeugkörper angeordnet.

14. Das Roller-Typ-Zweirad-Kraftfahrzeug (1) gemäß irgendeinem der Ansprüche 1 bis 13, das weiterhin umfasst:
jeweils den Sitz (17) zum sitzen für einen Fahrer;
rechte und linke Fußstützen (18), die sich von den Seiten des Sitzes (17) nach vorne erstrecken; und
ein Abdeckelement (20), das zwischen der rechten und linken Fußstütze (18) und vor dem Sitz (17) angeordnet ist und von den Fußstützen (18) nach oben ragt;
wobei die Motoreinheit (7) einen Motor (31), der vor einem vorderen Ende des Sitzes (17) und unter dem Abdeckelement (20) angeordnet ist, und eine Ausgangswelle (34), die hinter dem vorderen Ende des Sitzes (17) und hinter den Fußstützen (18) angeordnet ist, enthält.

## Revendications

1. Véhicule motorisé à deux roues de type scooter (1), comprenant :
une unité moteur (7) incluant un moteur (31) avec un vilebrequin (40), un mécanisme de changement de vitesse (35) pour changer la vitesse de rotation délivrée par le vilebrequin (40) du moteur (31), et un arbre de sortie (34) pour recevoir de la puissance du mécanisme de changement de vitesse (35), dans lequel le mécanisme de changement de vitesse (35) comporte une transmission variable en continu à courroie trapézoïdale (32) ;
une première poulie (73) fixée à l'arbre de sortie (34) ;
une deuxième poulie (75) connectée à une roue motrice (9) ;
une courroie synchrone (76) s'étendant entre la première poulie (73) et la deuxième poulie (75) et enroulée autour de celles-ci pour transmettre la puissance de l'arbre de sortie (34) à la roue motrice (9) ; et
un bras oscillant (8) pour supporter la roue motrice (9) de manière à pouvoir pivoter autour de l'arbre de sortie (34), dans lequel
le mécanisme de changement de vitesse (35) est la transmission variable en continu à courroie trapézoïdale (32) comportant un arbre d'entraînement (40), un arbre entraîné (51) et la courroie trapézoïdale (49), le mécanisme de changement de vitesse (35) comporte un mécanisme de réduction de vitesse (33) pour ralentir la sortie de la transmission variable en continu à courroie trapézoïdale (32), la première poulie (73) a un diamètre égal à un engrenage (66) du mécanisme de réduction (33) fixé à l'arbre de sortie (34) ;
l'unité moteur (7) comporte un mécanisme d'embrayage (59) disposé coaxialement à l'arbre entraîné (51), et le mécanisme de réduction de vitesse (33) disposé entre la transmission variable en continu (32) et le mécanisme d'embrayage (59) ; et
la sortie de la transmission variable en continu (32) est transmise à l'arbre de sortie (34) via le mécanisme d'embrayage (59) et le mécanisme de réduction de vitesse (33).

2. Véhicule motorisé à deux roues de type scooter (1) selon la revendication 1, dans lequel le bras oscillant (8) est supporté par l'unité moteur (7) pour pouvoir tourner autour de l'arbre de sortie (34) entre la première poulie (73) et l'unité moteur (7).

3. Véhicule motorisé à deux roues de type scooter (1) selon la revendication 1 ou 2, dans lequel le bras oscillant (8) est formé de deux moitiés, qui sont une première moitié (81) située d'un côté de la roue motrice (9) et une deuxième moitié (82) située de l'autre côté de la roue motrice (9) ;
la première moitié (81) étant disposée entre la première poulie (73) et l'unité moteur (7), et supportée par l'unité moteur (7) pour pouvoir tourner autour de l'arbre de sortie (34) ; et
la deuxième moitié (82) comportant un arbre de support (94) disposé dans l'unité moteur (7) de manière à être coaxial avec l'arbre de sortie (34), la deuxième moitié (82) étant disposée de l'autre côté de l'unité moteur (7) et supportée de manière rotative par l'arbre de support (94).

4. Véhicule motorisé à deux roues de type scooter (1) selon la revendication 3, dans lequel la première moitié est une partie divisée gauche (81) et la deuxième moitié est une partie divisée droite (82).

5. Véhicule motorisé à deux roues de type scooter (1) selon la revendication 4, dans lequel un bossage de montage (81a) de la partie divisée gauche (81) et un bossage de montage (82a) de la partie divisée droite (82) sont en butée bout à bout l'un contre l'autre.

6. Véhicule motorisé à deux roues de type scooter (1) selon l'une quelconque des revendications 1 à 5, comprenant en outre des éléments de fixation (78) pour fixer directement entre elles la deuxième poulie (75) et la roue motrice (9).

7. Véhicule motorisé à deux roues de type scooter (1) selon la revendication 6, dans lequel les éléments de fixation (78) sont des boulons (78).

8. Véhicule motorisé à deux roues de type scooter (1) selon l'une quelconque des revendications 1 à 7, comprenant en outre un mécanisme de freinage (101) pour freiner la rotation de la roue motrice (9), dans lequel la deuxième poulie (75) est disposée d'un côté de la roue motrice (9), et le mécanisme de freinage (101) est disposé de l'autre côté de la roue motrice (9).

9. Véhicule motorisé à deux roues de type scooter (1) selon l'une quelconque des revendications 1 à 8, comprenant en outre :
un siège (17) pour asseoir un conducteur ;
un réservoir de carburant (16) disposé sous le siège (17) et au-dessus de l'unité moteur (7) ; et
une béquille principale (14) connectée à une position inférieure de l'unité moteur (7) pour abaisser la roue motrice (9) sur la surface de la route et lever la roue motrice (9) de la surface de la route ;
dans lequel, quand la béquille principale (14) est dans un état contenu, la béquille principale (14) et la roue arrière (9) se chevauchent dans une vue latérale ; et
la première poulie (73) est disposée à l'arrière de l'unité moteur (7) et au-dessus de la béquille principale (14).

10. Véhicule motorisé à deux roues de type scooter (1) selon l'une quelconque des revendications 1 à 9, dans lequel la courroie trapézoïdale (49) et la courroie synchrone (76) sont opposées l'une à l'autre de part et d'autre d'une ligne centrale du véhicule motorisé à deux roues (1), transversalement au corps du véhicule.

11. Véhicule motorisé à deux roues de type scooter (1) selon l'une quelconque des revendications 1 à 10, dans lequel la courroie trapézoïdale (49) est disposée à l'avant de l'arbre de sortie (34), et la courroie synchrone (76) est disposée à l'arrière de l'arbre de sortie (34).

12. Véhicule motorisé à deux roues de type scooter (1) selon l'une quelconque des revendications 1 à 11, dans lequel l'engrenage (66) du mécanisme de réduction (33) est disposé sur une ligne centrale (II-II), transversalement au véhicule à deux roues de type scooter dans une vue en plan.

13. Véhicule motorisé à deux roues de type scooter (1) selon l'une quelconque des revendications 1 à 12, dans lequel :
la première poulie (73) est disposée entre les extrémités droite et gauche de l'unité moteur (7), transversalement au corps du véhicule.

14. Véhicule motorisé à deux roues de type scooter (1) selon l'une quelconque des revendications 1 à 13, comprenant en outre respectivement :
un siège (17) pour asseoir un conducteur ;
des repose-pieds droit et gauche (18) s'étendant vers l'avant à partir des côtés du siège (17) ; et
un élément de carénage (20) situé entre les repose-pieds droit et gauche (18) et en avant du siège (17), et se projetant vers le haut à partir des repose-pieds (18) ;
dans lequel l'unité moteur (7) comprend un moteur (31) disposé à l'avant d'une extrémité avant du siège (17) et au-dessous de l'élément de carénage (20), et un arbre de sortie (34) disposé en arrière de l'extrémité avant du siège (17) et en arrière des repose-pieds (18).
